# EUROPEAN PATENT APPLICATION

(11) **EP 2 230 016 A1**
(43) Date of publication of application: **22.09.2010**
(21) Application number: 10154254.6
(22) Date of filing: 22.02.2010
(51) Int. Cl.: B01L 3/00

(54) **Centrifugal force based microfluidic device, biochemical treatment system having the same, and method of fabricating the microfluidic device**

(30) Priority: 10.03.2009 KR 20090020363
(71) Applicant: Samsung Electronics Co., Ltd., Suwon-si, Gyeonggi-Do (KR)
(72) Inventor: Kim, Chung ung, Gyeonggi-do (KR); Lee, Ki ju, Gyeonggi-do (KR); Park, Jong jin, Gyeonggi-do (KR); Cho, Dong hwi, Gyeonggi-do (KR); Bae, Su bong, Gyeonggi-do (KR)
(74) Representative: Weigelt, Udo

(57) **Abstract**

Provided are a centrifugal force-based microfluidic device (10) in which biochemical treatments of samples are executed, a biochemical treatment system including the centrifugal force-based microfluidic device, and a method of fabricating the centrifugal force-based microfluidic device. The centrifugal force-based microfluidic device (10) includes a rotational platform (12) including a unit to perform biochemical treatments of samples and a mounting hole (13) defined within to which a turntable including a magnetic force generator is inserted; and a cap (21) coupled to the rotational platform (12) closing a side of the mounting hole (13) opposite to a side in which the turntable is inserted, and including a part formed of a ferromagnetic material pulled by magnetic force generated by the magnetic force generator.

## Description

### BACKGROUND

An embodiment or embodiments of a centrifugal force-based microfluidic device to perform biochemical treatments is disclosed, and more particularly, to a system including the centrifugal force-based microfluidic device, and a method of manufacturing the centrifugal force-based microfluidic device.

Microfluidic devices include a micro channel, a chamber, and a reaction region therein to perform biochemical treatments such as culturing, mixing, separating, and enriching of samples after injecting a small amount of bio samples into the microfluidic devices. Microfluidic devices which use a centrifugal force as a driving force to convey samples or fluid are referred to as centrifugal force-based microfluidic devices. Centrifugal force-based microfluidic devices are typically formed as disk shapes. Since biochemical treatments (mainly executed in laboratories) may be performed easily by using centrifugal force-based microfluidic devices, centrifugal force-based microfluidic devices are also referred to as lab-on-a-disk or lab-on-a-CD.

In a centrifugal force-based microfluidic device, bio samples are moved from a rotary center of the microfluidic device due to centrifugal force, and accordingly, an inlet hole through which the sample is injected into the microfluidic device is disposed on a portion that is relatively close to the rotary center of the microfluidic device.

General biochemical treatment apparatuses using a centrifugal force-based microfluidic device include a turntable that is inserted into a through hole formed on the rotary center of the microfluidic device and a clamp compressing a peripheral portion adjacent to the through hole of the microfluidic device for stably rotating the microfluidic device at a high speed. On the other hand, in order to clamp the microfluidic device to stably rotate it, a diameter of the clamp should be increased. However, the inlet hole, through which the bio samples may be injected, and the clamp may be too close to each other, or overlap each other, and accordingly, the clamp may be contaminated by the bio samples. The contamination causes degradation in reliability of biochemical test results. On the other hand, when the location of the inlet hole is positioned such that the inlet hole can be sufficiently separated from the clamp, it is difficult to obtain a disk-shaped microfluidic device having small diameter.

### SUMMARY

Additional aspects and/or advantages will be set forth in part in the description which follows and, in part, will be apparent from the description, or may be learned by practice of the invention.

The embodiments provide a centrifugal force-based microfluidic device that can be stably fixed on a turntable while reducing a region required to fix the microfluidic device onto the turntable, a biochemical treatment system including the centrifugal force-based microfluidic device, and a method of fabricating the centrifugal force-based microfluidic device.

The embodiments also provides a centrifugal force-based microfluidic device not including a clamp that compresses the centrifugal force-based microfluidic device onto the turntable in order to fix the centrifugal force-based microfluidic device with respect to the turntable, a biochemical treatment system including the centrifugal force-based microfluidic device, and a method of fabricating the centrifugal force-based microfluidic device.

One embodiment provides a centrifugal force-based microfluidic device mounted on a turntable including: a rotational platform including a unit to perform biochemical treatments of samples and a mounting hole to which the turntable including a magnetic force generator is inserted; and a cap coupled to the rotational platform closing a side of the mounting hole opposite to a side in which the turntable is inserted, and including a part formed of a ferromagnetic material so the cap is pulled by magnetic force generated by the magnetic force generator.

The unit to perform biochemical treatment of samples may include an inlet hole through which the samples are injected into the rotational platform. The shortest distance between the inlet hole and the cap may be at least 3 mm.

The cap may include: a flange portion attached to a peripheral portion adjacent to the mounting hole; and a stepped surface portion that is stepped from the flange portion so as not to contact the turntable when the turntable is inserted in the mounting hole. The cap may further include a coupling guide hole on a center portion having an inner diameter of approximately 2 mm. The flange portion may be attached to the peripheral portion using a dual adhesive tape or an adhesive.

The rotational platform further may include a cap receiving groove that is stepped down to receive the flange portion on the peripheral portion of the mounting hole.

Another embodiment provides a biochemical treatment system including a centrifugal force-based microfluidic device. The centrifugal forces-based microfluid device may include: a rotational platform, and a cap coupled to the rotational platform having a part formed of ferromagnetic material as well as a biochemical treatment apparatus rotating the centrifugal force-based microfluidic device. The biochemical treatment apparatus may include a turntable having a magnetic force generator in communication with the cap of the centrifugal force-based microfluid device. The centrifugal force-based microfluidic device may also include a unit to perform biochemical treatments of samples having an inlet hole configured to receive fluid wherethrough biochemical samples are injected into the rotational platform.

Furthermore, another embodiment provides a biochemical treatment system including: a centrifugal force-based microfluidic device and a turntable including a magnetic force generator, and moving between a mounting position and a separating position, When the turntable is in the mounting position, the cap may be pulled by magnetic force generated by the magnetic force generator fixing the centrifugal force-based microfluidic device on the turntable. The turntable may further include a supporting surface to support the rotational platform and a mounting protrusion protruding from the supporting surface. The mounting protrusion may be inserted into the mounting hole when the turntable is in mounting position and separate from the mounting hole when the turntable is in separating position.

The magnetic force generator may include a permanent magnet.

The biochemical treatment system may further include a tray supporting the centrifugal force-based microfluidic device when the turntable is located at the separating position.

Yet another embodiment provides a method of fabricating a centrifugal force-based microfluidic device, the method including: preparing a rotational platform including a mounting hole to which a turntable is inserted and a cap having a diameter to cover the mounting hole and having a coupling guide hole on a center portion; preparing a jig including a supporting surface having a diameter that is greater than an inner diameter of the mounting hole, a rotational platform arranging protrusion having a diameter corresponding to the inner diameter of the mounting hole and protruding from the supporting surface, and a cap arranging protrusion that has a diameter corresponding to an inner diameter of the coupling guide hole and protrudes from the rotational platform arranging protrusion; inserting the jig into the rotational platform such that the rotational platform arranging protrusion may be inserted in the mounting hole and the supporting surface may support the rotational platform; inserting the jig into the cap such that the cap arranging protrusion may be inserted in the coupling guide hole; and coupling a peripheral portion of the cap to the rotational platform in a state where the jig is inserted in the rotational platform and the cap.

The coupling of the peripheral portion of the cap to the rotational platform may include attaching the cap onto the rotational platform by using a dual adhesive tape or an adhesive.

### BRIEF DESCRIPTION OF THE DRAWINGS

These and/or other aspects and advantages will become apparent and more readily appreciated from the following description of the embodiments, taken in conjunction with the accompanying drawings of which:

Exemplary embodiments will be more clearly understood from the following detailed description taken in conjunction with the accompanying drawings in which:
FIG. 1 is an exploded perspective view of a centrifugal force-based microfluidic device according to an embodiment;
FIG. 2 is a cross-sectional view of a centrifugal force-based microfluidic device according to an embodiment;FIG. 3is a cross-sectional views of a biochemical treatment system showing a state where the centrifugal force-based microfluidic device of FIGS. 1 and 2 is separated from a turntable according to an embodiment of the present disclosure
FIG. 4 is a cross-sectional view of a biochemical treatment system showing a state where the centrifugal force-based microfluidic device of FIGS. 1 and 2 is fixed on the turntable according to an embodiment;
FIG. 5 is a cross-sectional view illustrating a method of fabricating the centrifugal force-based microfluidic device illustrated in FIG. 1 according to an embodiment; and
FIG. 6 is an exploded perspective view of a centrifugal force-based microfluidic device according to an embodiment.

### DETAILED DESCRIPTION OF EMBODIMENTS

Reference will now be made in detail to the embodiments, examples of which are illustrated in the accompanying drawings, wherein like reference numerals refer to the like elements throughout. The embodiments are described below to explain the present invention by referring to the figures.

The embodiments will be described in detail with reference to accompanying drawings as follows.

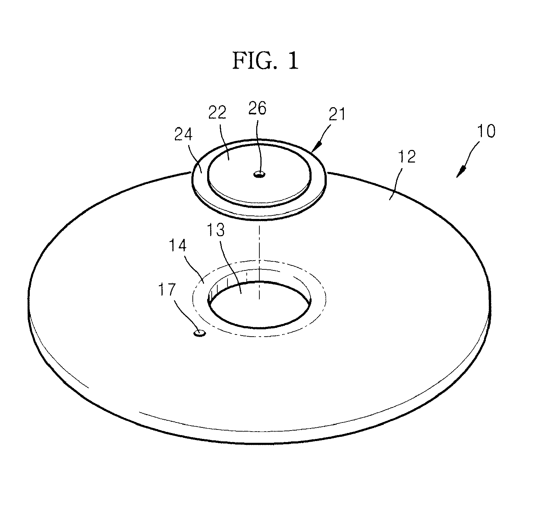

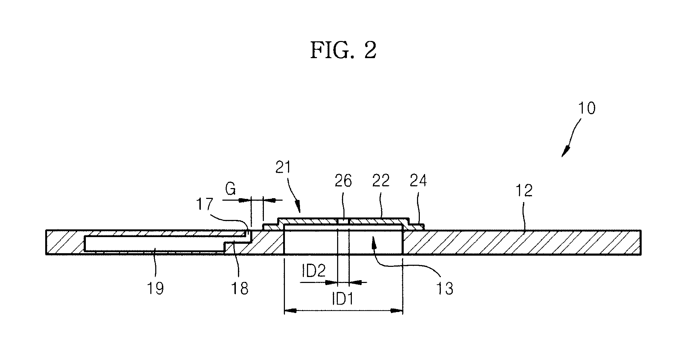

FIGS. 1 and 2 are, respectively, an exploded perspective view and a cross-sectional view of a centrifugal force-based microfluidic device 10 according to an embodiment.

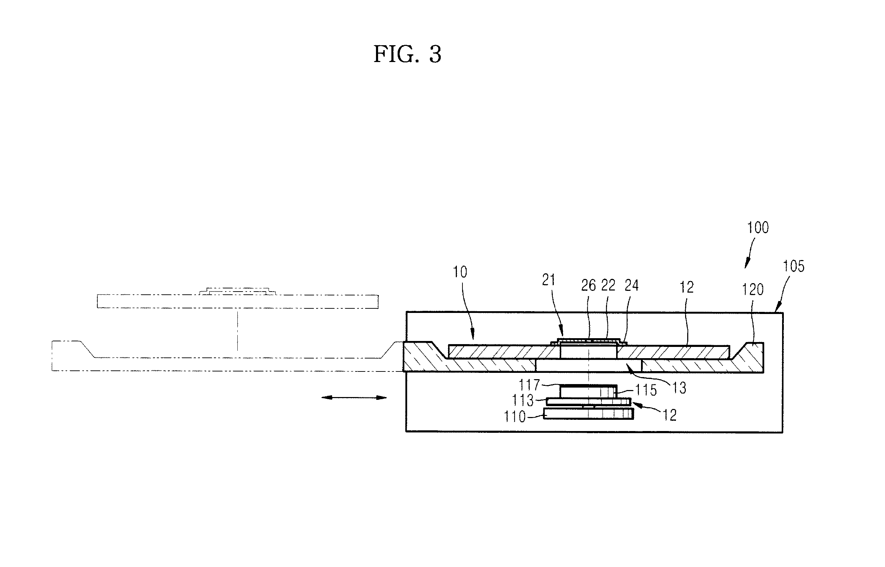

Referring to FIGS. 1 and 2, the centrifugal force-based microfluidic device 10 of the present embodiment includes a rotational platform 12 and a cap 21 coupled to the rotational platform 12. The rotational platform 12 is mounted on a turntable (112 of FIG. 3) that is a rotating unit to be rotated with the turntable 112. A diameter of the rotational platform 12 may be variable, for example, 8 cm or 12 cm. The rotational platform 12 includes a mounting hole 13 to which the turntable 112 is inserted. The mounting hole 13 has an inner diameter (ID1) of about 15 mm.

The rotational platform 12 includes a unit to perform biochemical treatment. The biochemical treatment of the sample may include culturing, mixing, separating, and enriching of samples. The unit to perform biochemical treatment of samples may include an inlet hole 17 for injecting a liquid, such as biochemical samples required in the biochemical treatment, a channel 18 for conveying the liquid, a chamber 19 for storing the liquid, a reaction region (not shown) in which biochemical reactions of the sample occur, and a valve (not shown) controlling flow of the liquid.

The turntable 112 is inserted into the mounting hole 13 from a lower portion thereof. The cap 21 closes an upper side of the mounting hole 13, that is, opposite the side where the turntable 112 is inserted. The cap 21 includes a ring-type flange portion 24 that is attached to a peripheral portion 14 adjacent to the mounting hole 13 and on an upper surface of the rotational platform 12, and a stepped surface portion 22 that is formed on an inner portion of the flange portion 24 to be stepped from the flange portion 24.

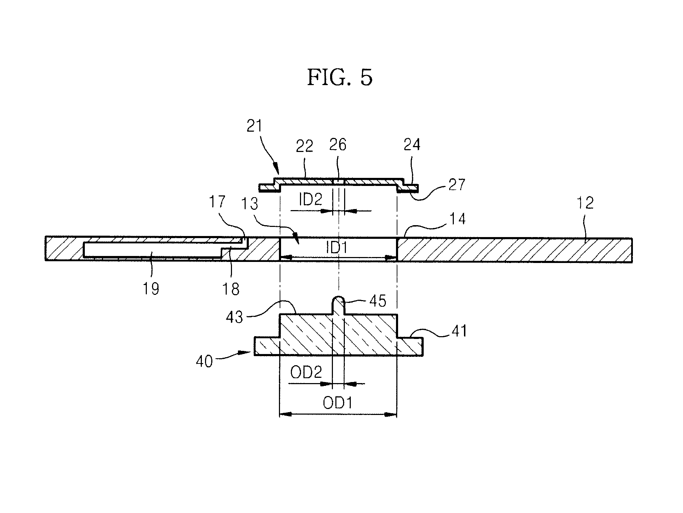

The cap 21 may be formed of a ferromagnetic material, such as stainless steel, or a part of the cap 21 may be formed of a ferromagnetic material. The flange portion 24 of the cap 21 may be attached to the peripheral portion 14 of the rotational platform 12 by using a double sided or dual-adhesive tape (27 of FIG. 5). The disclosure is not limited to using a dual-adhesive tape (27 of FIG. 5). Any adhesive can be used to attach the flange portion 24 of the cap 21 to the peripheral portion 14 of the rotational platform 12. The shortest distance between the cap 21, which is attached to the rotational platform 12, and the inlet hole 17 is at least 3 mm or greater. The cap 21 includes a coupling guide hole 26 on a center portion thereof. An inner diameter of the coupling guide hole 26 may be about 2 mm. However, the diameter will vary.

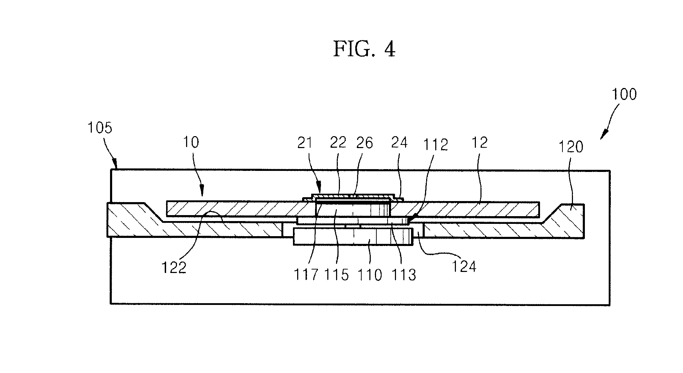

FIGS. 3 and 4 are cross-sectional views of a biochemical treatment system according to an embodiment. FIG. 3 shows a state where the centrifugal force-based microfluidic device 10 is separated from the turntable 112, and FIG. 4 shows a state where the centrifugal force-based microfluidic device 10 is fixed on the turntable 112.

Referring to FIGS. 3 and 4, the biochemical treatment system 100 of the present embodiment includes the centrifugal force-based microfluidic device 10 illustrated in FIGS. 1 and 2 and a biochemical treatment apparatus 105 rotating the centrifugal force-based microfluidic device 10 according to a certain program to induce biochemical treatment of bio samples. The biochemical treatment apparatus 105 includes the turntable 112.

The turntable 112 rotates in a state of being fixed on a rotary shaft (not shown) of a spindle motor 110. The turntable 112 includes a supporting surface 113 to support the rotational platform 12, a mounting protrusion 115 protruding from the supporting surface 113 and inserted into the mounting hole 13 of the centrifugal force-based centrifugal force-based microfluidic device 10, and a magnetic force generator 117 disposed on the mounting protrusion 115. The magnetic force generator 117 may include a permanent magnet. The turntable 112 may be moved between a mounting position where the mounting protrusion 115 is inserted into the mounting hole 13 (refer to FIG. 4) and a separating position where the mounting protrusion 115 is separated from the mounting hole 13 (refer to FIG. 3).

The biochemical treatment apparatus 105 further includes a tray 120 that supports the centrifugal force-based microfluidic device 10 when the turntable 112 is at the separating position. The tray 120 may be moved between an unloading position (refer to double-chained line of FIG. 3) where the tray 120 is removed from the biochemical treatment apparatus 105 and a loading position (refer to solid line of FIG. 3) where the tray 120 is inserted in the biochemical treatment apparatus 105. The tray 120 includes a mounting surface 122 supporting the centrifugal force-based microfluidic device 10, and a tray opening 124 so that the turntable 112 may be moved between the mounting position and the separating position when the tray 120 is at the loading position.

Processes of biochemical treatment using the biochemical treatment system 100 may be as follows. The centrifugal force-based microfluidic device 10, in which bio samples are injected through the inlet hole (17, refer to FIG. 1), is located on the mounting surface 122 of the tray 120 that is at the unloading position, and then the tray 120 is moved to the loading position (refer to FIG. 3). Next, the turntable 112 is ascended to the mounting position so that the mounting protrusion 115 is inserted into the mounting hole 13 of the centrifugal force-based microfluidic device 10 (refer to FIG. 4). The centrifugal force-based microfluidic device 10 is ascended by the supporting surface 113 of the turntable 112 and separated from the mounting surface 122. In addition, a top edge of the mounting protrusion 115 may approach, but not contact, the cap 21 until a slight distance exists between the mounting protrusion 115 and the cap 21. Although the mounting protrusion 115 does not contact the cap 21, the mounting protrusion 115 and the cap 21 are close to each other, and thus, the cap 21 is pulled downward by a strong magnetic force due to the magnetic force generator 117 and the centrifugal force-based microfluidic device 10 is fixed on the turntable 112. When the turntable 112 is rotated, the centrifugal force-based microfluidic device 10 may stably rotate with the turntable 112.

On the other hand, the biochemical treatment apparatus 105 may further include a unit to detect a component or a concentration of the component in a bio sample that is biochemically treated in the centrifugal force-based microfluidic device 10. For example, the above detecting unit may include a light source irradiating light onto a bio sample that is biochemically treated, and a photosensor for recognizing a light transmission intensity and a fluorescent intensity of the sample.

After performing biochemical treatment using the centrifugal force-based microfluidic device 10, when the turntable 112 is descended, the turntable 112 is moved to the separating position shown in FIG. 3 and then the tray 120 is moved to the unloading position so that the centrifugal force-based microfluidic device 10 may be withdrawn from the biochemical treatment apparatus 105.

FIG. 5 is a cross-sectional view illustrating a method of fabricating the centrifugal force-based microfluidic device 10 illustrated in FIG. 1.

Referring to FIG. 5, the method of fabricating the centrifugal force-based microfluidic device 10 includes an operation of preparing the rotational platform 12 and the cap 21, an operation of preparing a jig 40 to arrange the rotational platform 12 and the cap 21, an operation of inserting the jig 40 into the rotational platform 12, an operation of inserting the jig 40 into the cap 21, and an operation of coupling the rotational platform 12 to the cap 21.

The jig 40 includes a supporting surface 41 having a diameter that is greater than the inner diameter ID1 of the mounting hole 13 of the rotational platform 12, a rotational platform arranging protrusion 43 having a diameter OD1 corresponding to the inner diameter ID1 of the mounting hole 13 and protruding from the supporting surface 41, and a cap arranging protrusion 45 having a diameter OD2 corresponding to an inner diameter ID2 of the coupling guide hole 26 and protruding from the rotational platform arranging protrusion 43. In the operation of inserting the jig 40 into the rotational platform 12, the jig 40 is inserted into the rotational platform 12 such that the rotational platform arranging protrusion 43 may be inserted in the mounting hole 13, and the supporting surface 41 may support the rotational platform 12. In the operation of inserting the jig 40 into the cap 21, the jig 40 is inserted into the cap 21 such that the cap arranging protrusion 45 may be inserted into the coupling guide hole 26.

In the operation of coupling the rotational platform 12 with the cap 21, the flange portion 24, which is disposed on the peripheral portion of the cap 21, is coupled to the rotational platform 12 in a state where the jig 40 is inserted into the rotational platform 12 and the cap 21. The flange portion 24 is attached to the rotational platform 12 after applying the double sided or dual-adhesive tape 27 onto the flange portion 24, and then the cap 21 may be adhered to the rotational platform 12 sealing the hole 12 on one side of the platform 12. The disclosure is not limited to using a dual-adhesive tape 27. Any adhesive can be used to attach the flange portion 24 of the cap 21 to the rotational platform 12

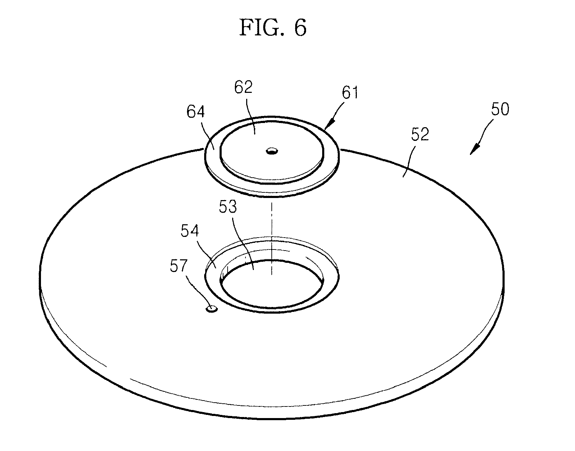

FIG. 6 is an exploded perspective view of a centrifugal force-based microfluidic device according to another embodiment. A centrifugal force-based microfluidic device 50 illustrated in FIG. 6 has similar structure to that of the centrifugal force-based microfluidic device 10 of FIGS. 1 and 2, and accordingly, differences between the centrifugal force-based microfluidic device 50 and the centrifugal force-based microfluidic device 10 will be described as follows.

Referring to FIG. 6, the centrifugal force-based microfluidic device 50 includes a rotational platform 52 and a cap 61 coupled to the rotational platform 52. The rotational platform 52 includes a mounting hole 53 in which the turntable 112 (refer to FIG. 3) is inserted. The rotational platform 52 includes a unit to perform biochemical treatment of bio samples. The unit for performing biochemical treatment may include an inlet hole 57.

The cap 61 blocks an upper side of the mounting hole 53, that is, opposite the side to which the turntable 112 is inserted. The cap 61 includes a ring-type flange portion 64 and a stepped surface portion 62 formed on an inner portion of the ring-type flange portion 64 to be stepped from the flange portion 64. A cap receiving groove 54 that is stepped down to receive the flange portion 64 is formed on a peripheral portion adjacent to the mounting hole 53 in the rotational platform 52. The cap 61 may be arranged easily on the rotational platform 52 by forming the cap receiving groove 54. Therefore, the cap 61 may be coupled to the rotational platform 52 easily without using the jig 40 (refer to FIG 5). The flange portion 64 may be attached to the rotational platform 52 by using the dual adhesive tape 27 (refer to FIG. 5) or an adhesive (not shown) sealing the hole 53 on one side of the platform 52.

According to an embodiment of the centrifugal force-based microfluidic device, a region required to fix the centrifugal force-based microfluidic device on the turntable may be reduced, and accordingly, difficulties in designing the centrifugal force-based microfluidic devices caused by the limitation in the location where the inlet hole is formed may be addressed.

In addition, according to embodiments, a clamp that is separated from the centrifugal force-based microfluidic device is not required, and thus degradation of reliability in the biochemical test results generated due to contamination of a clamp may be prevented.

Although a few embodiments have been shown and described, it would be appreciated by those skilled in the art that changes may be made in these embodiments without departing from the principles and spirit of the invention, the scope of which is defined in the claims and their equivalents.

## Claims

1. A centrifugal force-based microfluidic device mountable on a turntable comprising:
a rotational platform including a unit to perform biochemical treatments of samples and a mounting hole defined within the platform into which the turntable including a magnetic force generator is inserted; and
a cap coupled to the rotational platform closing a side of the mounting hole opposite to a side in which the turntable is inserted, and including a part formed of a ferromagnetic material so the cap is pulled by magnetic force generated by the magnetic force generator.

2. The centrifugal force-based microfluidic device of claim 1, wherein the unit to perform biochemical treatment of samples comprises an inlet hole configured to receive fluid wherethrough the samples are injected into the rotational platform.

3. The centrifugal force-based microfluidic device of claim 2, wherein the shortest distance between the inlet hole and the cap is at least 3 mm.

4. The centrifugal force-based microfluidic device of claim 1, wherein the cap comprises:
a flange portion attached to a peripheral portion adjacent to the mounting hole; and
a stepped surface portion formed on an inner portion of the flange portion stepped to isolate from the turntable when the turntable is inserted in the mounting hole.

5. The centrifugal force-based microfluidic device of claim 4, wherein the cap further comprises a coupling guide hole defined within the cap on a center portion, having an inner diameter of approximately 2 mm.

6. The centrifugal force-based microfluidic device of claim 4, wherein the flange portion is attached to the peripheral portion using one of a dual adhesive tape and an adhesive.

7. The centrifugal force-based microfluidic device of claim 4, wherein the rotational platform further comprises a cap receiving groove that is stepped down to receive the flange portion on the peripheral portion of the mounting hole.

8. A biochemical treatment system comprising:
a centrifugal force-based microfluidic device according to one of claims 1 through 6; and
a turntable including a magnetic force generator, and moving between a mounting position and a separating position, when in the mounting position, the cap is pulled by magnetic force generated by the magnetic force generator fixing the centrifugal force-based microfluidic device on the turntable.

9. The biochemical treatment system of claim 8, wherein the magnetic force generator includes a permanent magnet.

10. The biochemical treatment system of claim 8, further comprising a tray supporting the centrifugal force-based microfluidic device when the turntable is located at the separating position.

11. A method of fabricating a centrifugal force-based microfluidic device, the method comprising:
preparing a rotational platform including a mounting hole to which a turntable is inserted and a cap having a diameter to cover the mounting hole and having a coupling guide hole on a center portion;
preparing a jig including a supporting surface having a diameter that is greater than an inner diameter of the mounting hole, a rotational platform arranging protrusion having a diameter corresponding to the inner diameter of the mounting hole and protruding from the supporting surface, and a cap arranging protrusion having a diameter corresponding to an inner diameter of the coupling guide hole and protruding from the rotational platform arranging protrusion;
inserting the jig into the rotational platform such that the rotational platform arranging protrusion is inserted in the mounting hole and the supporting surface supports the rotational platform;
inserting the jig into the cap such that the cap arranging protrusion is inserted in the coupling guide hole; and
coupling a peripheral portion of the cap to the rotational platform in a state where the jig is inserted in the rotational platform and the cap.

12. The method of claim 11, wherein the coupling of the peripheral portion of the cap to the rotational platform comprises attaching the cap onto the rotational platform using a dual adhesive tape.
